# EUROPEAN PATENT APPLICATION

(11) **EP 3 382 634 A1**
(43) Date of publication of application: **03.10.2018**
(21) Application number: 18162777.9
(22) Date of filing: 20.03.2018
(51) Int. Cl.: G06Q 40/02, G06Q 20/10, G06Q 20/22

(54) **METHOD, INFORMATION PROCESSING APPARATUS AND PROGRAM**

(30) Priority: 31.03.2017 JP 2017072023
(71) Applicant: FUJITSU LIMITED, Kanagawa 211-8588 (JP)
(72) Inventor: NEGISHI, Makoto, Kanagawa, 211-8588 (JP); KIRA, Shigeru, Shiga, 520-0043 (JP); NAKAMURA, Nodoka, Shiga, 520-0043 (JP); WANG, Xin, Kanagawa, 211-8588 (JP); TAKAHASHI, Nobuaki, Tokyo, 144-8588 (JP)
(74) Representative: Hoffmann Eitle

(57) **Abstract**

A method using a computer includes receiving a plurality of request signals each of which requests opening an account, transmitting, to a first financial system, a first request signal of the plurality of request signals which requests opening a first account in the first financial system, transmitting, to at least one of the first financial system and a second financial system, a second request signal of the plurality of request signals which requests opening a second account in at least one of the first financial system and the second financial system, associating first information indicating the first account with second information indicating the second account, and outputting third information obtained by associating the first information with the second information.

## Description

### TECHNICAL FIELD

The embodiments discussed herein are related to a method, an information processing apparatus and a program.

### BACKGROUND ART

Traditionally, techniques related to financial transactions to be executed using a user terminal are known. For example, a technique for setting a loan using a user terminal is known. In addition, for example, a technique for presenting information on an estimate of service contents and a loan via a website is known. In addition, for example, a technique for presenting a recommended credit line using a mobile terminal upon credit application is known. As related-art documents, there are Japanese Laid-open Patent Publication No. 2004-078293, Japanese Laid-open Patent Publication No. 2004-139346 and Japanese Laid-open Patent Publication No. 2014-225253.

### SUMMARY

### [TECHNICAL PROBLEM]

In the aforementioned conventional techniques, however, there is a problem that it is difficult to centrally manage accounts of multiple users. For example, upon the opening of accounts of multiple users, operations may not be collectively executed.

### [SOLUTION TO PROBLEM]

According to an aspect of the invention, a method using a computer, the method includes receiving a plurality of request signals each of which requests opening an account, transmitting, to a first financial system, a first request signal of the plurality of request signals which requests opening a first account in the first financial system, transmitting, to at least one of the first financial system and a second financial system, a second request signal of the plurality of request signals which requests opening a second account in at least one of the first financial system and the second financial system, associating first information indicating the first account with second information indicating the second account, and outputting third information obtained by integrating the first information with the second information.

### [ADVANTAGEOUS EFFECTS OF INVENTION]

According to an aspect, accounts of multiple users may be centrally managed.

### BRIEF DESCRIPTION OF DRAWINGS

FIG. 1 is a diagram describing a financial transaction management system according to an embodiment;
FIG. 2 is a block diagram illustrating an example of each of functional configurations of user terminals according to the embodiment;
FIG. 3 is a block diagram illustrating an example of a functional configuration of a financial transaction managing device according to the embodiment;
FIG. 4 is a diagram describing saving box information;
FIGs. 5A and 5B are sequence diagrams illustrating an example of a process of opening an account;
FIG. 6 is a diagram illustrating an example of a saving box selection screen;
FIG. 7 is a diagram illustrating an example of a saving box setting screen;
FIG. 8 is a diagram illustrating an example of a portal screen;
FIG. 9 is a sequence diagram illustrating an example of a process of providing account information;
FIG. 10 is a diagram illustrating an example of a portal screen; and
FIG. 11 is a block diagram illustrating an example of a hardware configuration of the financial transaction managing device according to the embodiment.

### DESCRIPTION OF EMBODIMENTS

Hereinafter, an account opening support program, a program for providing account information, a method for supporting account opening, a method for providing account information, and a financial transaction managing device according to embodiments are described. In the embodiments, configurations that include the same function are indicated by the same reference symbol, and a duplicated description is omitted. The account opening support program, the program for providing account information, the method for supporting account opening, the method for providing account information, and the financial transaction managing device, which are described in the embodiments, are examples and not limit the embodiments. In addition, the following embodiments may be combined without contradiction.

A financial transaction management system according to an embodiment centrally manages accounts of multiple users. The financial transaction management system according to the embodiment requests a financial institution to execute a process and provides account information to users.

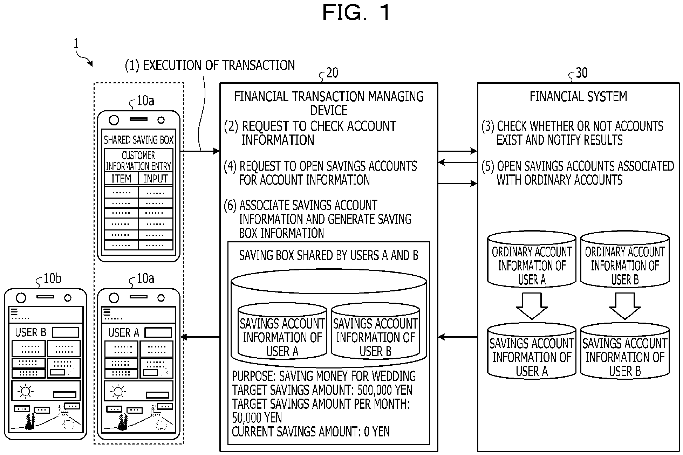

FIG. 1 is a diagram describing the financial transaction management system according to the embodiment. As illustrated in FIG. 1, the financial transaction management system 1 includes a user terminal 10a, a user terminal 10b, and a financial transaction managing device 20 coupled to the user terminals. In addition, the financial transaction managing device 20 is coupled to a financial system 30. In the financial transaction management system 1, the user terminal 10a, the user terminal 10b, the financial transaction managing device 20, and the financial system 30 are coupled to and able to communicate with each other via a communication network such as the Internet or a local area network (LAN).

Specifically, as the user terminal 10a and the user terminal 10b, personal computers, smartphones, tablet terminals, or the like may be used. In addition, as the financial transaction managing device 20, a server device on a cloud may be used. In addition, as the financial system 30, a server device having a bank account host function may be used. In the following description, the user terminal 10a and the user terminal 10b may be merely referred to as user terminals 10, when the user terminals 10a and 10b are not distinguished.

An example in which a user A who uses the user terminal 10a and a user B who uses the user terminal 10b use the financial transaction management system 1 to save their money for wedding is described using FIG. 1. In this case, the users A and B may use the financial transaction management system 1, thereby efficiently requesting the financial institution to execute a process and efficiently sharing information.

As illustrated in FIG. 1, first, the user terminal 10a transmits details entered in items by the user A to the financial transaction managing device 20 and requests the execution of a transaction. In this case, account information of the user A, account information of the user B, a purpose for saving money, a target savings amount per month, a final target savings amount, and the like are entered in the user terminal 10a. In addition, the account information includes branch codes and account numbers.

Next, the financial transaction managing device 20 requests the financial system 30 to check whether or not ordinary accounts indicated in the transmitted account information exist. Then, the financial system 30 checks whether or not the requested ordinary accounts exist, and notifies the results of the checking to the financial transaction managing device 20. If the financial transaction managing device 20 receives the notification indicating that the ordinary accounts exist, the financial transaction managing device 20 requests the financial system 30 to open savings accounts for the account information.

Then, the financial system 30 executes a process of opening the savings accounts associated with the ordinary accounts for the account information. In this case, the financial system 30 generates, together with the opening of the accounts, savings account information of the user A and savings account information of the user B in such a manner that the savings account information of the user A is associated with ordinary account information of the user A and that the savings account information of the user B is associated with ordinary account information of the user B.

The ordinary accounts and the savings accounts indicate existing accounts and newly generated accounts associated the existing accounts and do not limit the types of accounts to be handled by the financial institution. For example, the ordinary accounts and the savings accounts may be arbitrary types of accounts such as ordinary savings accounts, regular savings accounts, and foreign currency time deposit accounts.

Next, the financial transaction managing device 20 generates saving box information associated with the savings account information, acquired from the financial system 30, of the user A and the savings account information, acquired from the financial system 30, of the user B. The saving box information includes a purpose for saving money, a target savings amount per month, a final target savings amount, and a current savings amount. For example, the current savings amount is the sum of a balance included in the savings account information of the user A and a balance included in the savings account information of the user B. In addition, the financial transaction managing device 20 acquires the savings account information from the financial system 30 at predetermined time and updates the saving box information based on the acquired information.

In addition, the financial transaction managing device 20 provides the saving box information to the user terminals 10. Then, the users A and B use dedicated applications installed in the user terminals 10 or web browsers installed in the user terminals 10 to browse the saving box information.

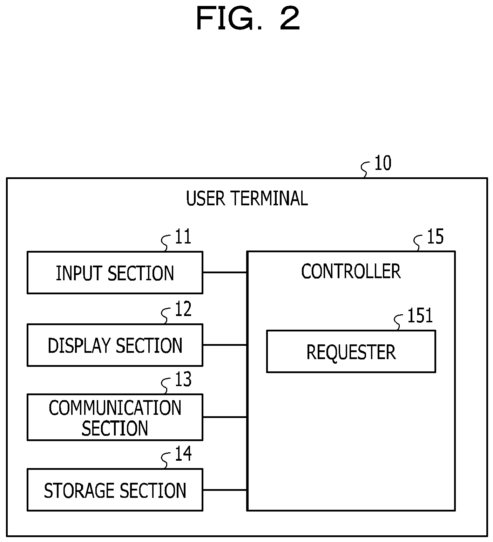

FIG. 2 is a block diagram illustrating an example of each of functional configurations of the user terminals according to the embodiment. As illustrated in FIG. 2, each of the user terminals 10 includes an input section 11, a display section 12, a communication section 13, a storage section 14, and a controller 15.

The input section 11 is a user interface (UI) that receives a user's input operation from an input device or the like. In addition, the display section 12 displays a screen on a monitor or the like. In addition, the communication section 13 is a device that executes data communication with another external device via the network. The storage section 14 is, for example, a semiconductor memory or the like and stores various types of information. The controller 15 controls various operations of the user terminal 10.

The controller 15 includes a requester 151. The controller 15 may be achieved by a central processing unit (CPU), a micro processing unit (MPU), or the like. Alternatively, the controller 15 may be achieved by hard-wired logic such as an application specific integrated circuit (ASIC) or a field programmable gate array (FPGA).

The requester 151 requests the financial transaction managing device 20 to execute a user authentication process. In this case, the requester 151 transmits user identification information to the financial transaction managing device 20. The user identification information is, for example, a user ID and a password. In addition, the user identification information may be entered by a user or stored in the storage section 14.

In addition, the requester 151 requests the financial transaction managing device 20 to execute a process of requesting the opening of an account and the start of a financial transaction. In this case, the requester 151 transmits information on the opening of the account and information on the financial transaction to the financial transaction managing device 20. The information on the opening of the account and the information on the financial transaction include, for example, an account number of an ordinary account, a purpose for saving money, a target savings amount, an amount to be withdrawn, the timing of the withdrawal, and shared information. The shared information includes an account number of an ordinary account of a user who shares information on the savings, an amount to be withdrawn from the ordinary account of the user, and the timing of the withdrawal. In addition, the information on the opening of the account and the information on the financial transaction may be entered by the user or stored in the storage section 14.

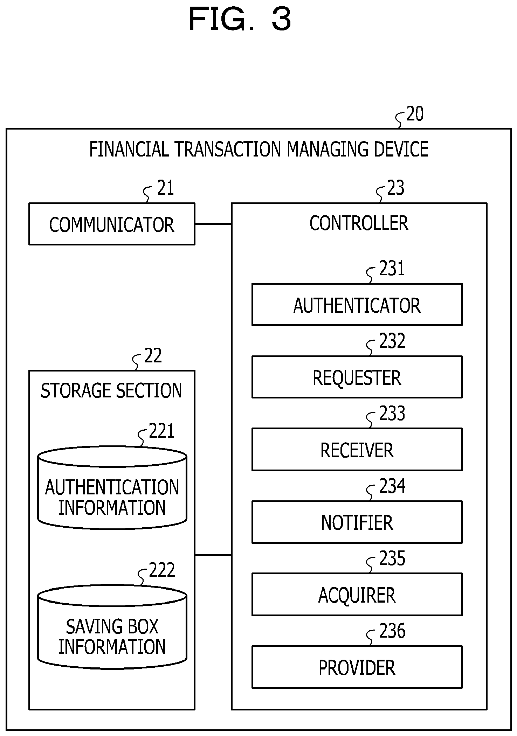

FIG. 3 is a block diagram illustrating an example of a functional configuration of the financial transaction managing device according to the embodiment. The financial transaction managing device 20 includes a communicator 21, a storage section 22, and a controller 23.

The communicator 21 is a device that executes data communication with another external device via the network. The storage section 14 is, for example, a semiconductor memory and stores various types of information such as authentication information 221 and saving box information 222. The authentication information 221 includes user IDs and passwords associated with the user IDs. The saving box information 222 is information associated with savings account information of multiple users. The saving box information 222 may be savings account information of one user.

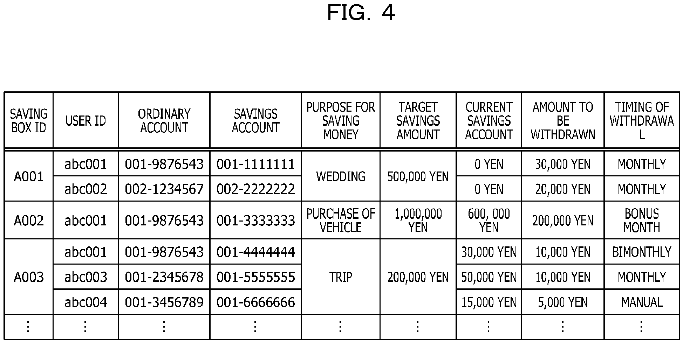

FIG. 4 is a diagram describing the saving box information. As illustrated in FIG. 4, in the saving box information 222, a user ID, an ordinary account, a savings account, a purpose for saving money, a target savings amount, a current savings amount, an amount to be withdrawn, the timing of the withdrawal, and the like are stored for each of saving box IDs. As illustrated in FIG. 4, in the saving box information 222, information of a savings account of an account number "001-1111111" and information of a savings account of an account number "002-2222222" are associated with a saving box ID "A001", for example. In this manner, the storage section 22 stores first account information and second account information associated with the first account information.

The controller 23 controls various operations of the financial transaction managing device 20. The controller 23 includes an authenticator 231, a requester 232, a receiver 233, a notifier 234, an acquirer 235, and a provider 236. The controller 23 may be achieved by a CPU, an MPU, or the like. Alternatively, the controller 23 may be achieved by hard-wired logic such as an ASIC or an FPGA.

The authenticator 231 executes user authentication based on user identification information transmitted from a user terminal. The authenticator 231 executes the authentication by determining whether or not a combination of a user ID and password included in the user identification information has been associated and stored in the authentication information 221.

The requester 232 requests, in response to a request to open accounts of multiple users, the financial system 30 to open a first account for a first user among the multiple users. In this case, the requester 232 requests the financial system 30 or another financial system to open a second account for a second user included in the multiple users. The multiple users may operate the user terminals 10 to request to open the accounts of the multiple users. Alternatively, a user representing the multiple users may operate the user terminals 10 to request to open the accounts of the multiple users. The financial system 30 is an example of a first financial system. In addition, the other financial system is an example of a second financial system.

The receiver 233 receives set information to be used to generate the saving box information 222 based on information transmitted from the user terminals 10. The receiver 233 receives a set target savings amount for the sum of a balance of the first account and a balance of the second account. In addition, the receiver 233 receives set information such as account numbers of ordinary accounts, purposes for saving money, amounts to be withdrawn, and the timing of the withdrawal that are associated with the first account and the second account.

The notifier 234 notifies results of the authentication by the authenticator 231 to the user terminals 10. In addition, the notifier 234 notifies the results of the authentication to a notification destination associated with either or both of the first and second users by detecting that the sum of the balance of the first account and the balance of the second account has reached the set target savings amount.

The acquirer 235 references, in response to a request, the storage section 22 storing information indicating the association of the first user's account managed by the financial system 30 with the second user's account managed by the financial system 30 or the other financial system, acquires information on the account of the first user from the financial system 30, and acquires information on the account of the second user from the financial system 30 or the other financial system.

The provider 236 provides, in response to a request, information obtained by integrating the information of the first account with the information of the second account. The information obtained by integrating the information of the first account with the information of the second account is, for example, information indicating the sum of the balance of the first account and the balance of the second account. The information obtained by integrating the information of the first account with the information of the second account and provided by the provider 236 may be browsed by the first user and the second user.

The provider 236 provides the information related to the account of the first user and acquired by the acquirer 235 and the information related to the account of the second user and acquired by the acquirer 235 to a source of the request, or provides the information obtained by integrating the acquired information on the account of the first user with the acquired information on the account of the second user to the source of the request. In this manner, the provider 236 may provide the information of the first account and the information of the second account in a state in which the information of the first account and the information of the second account are not integrated with each other.

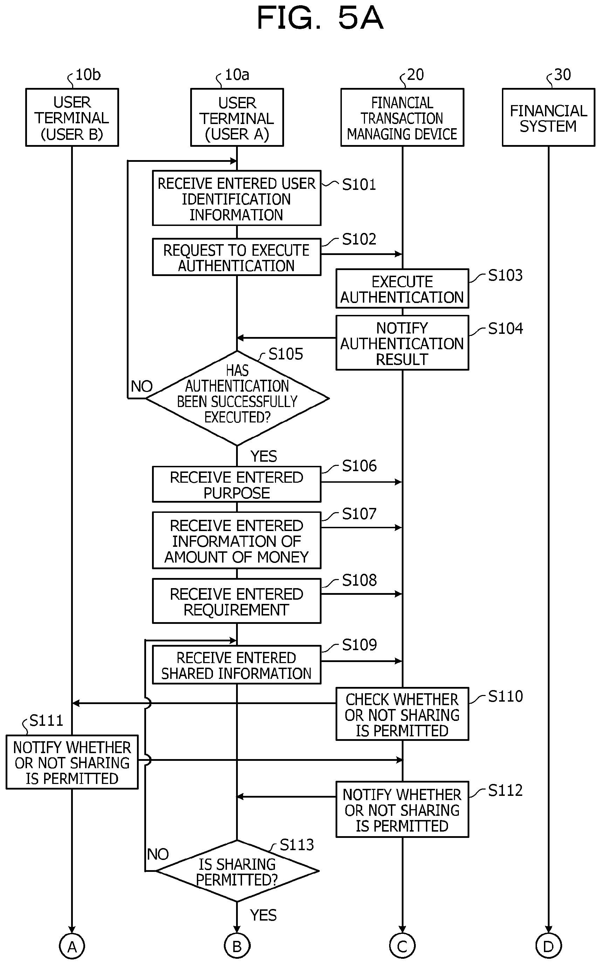

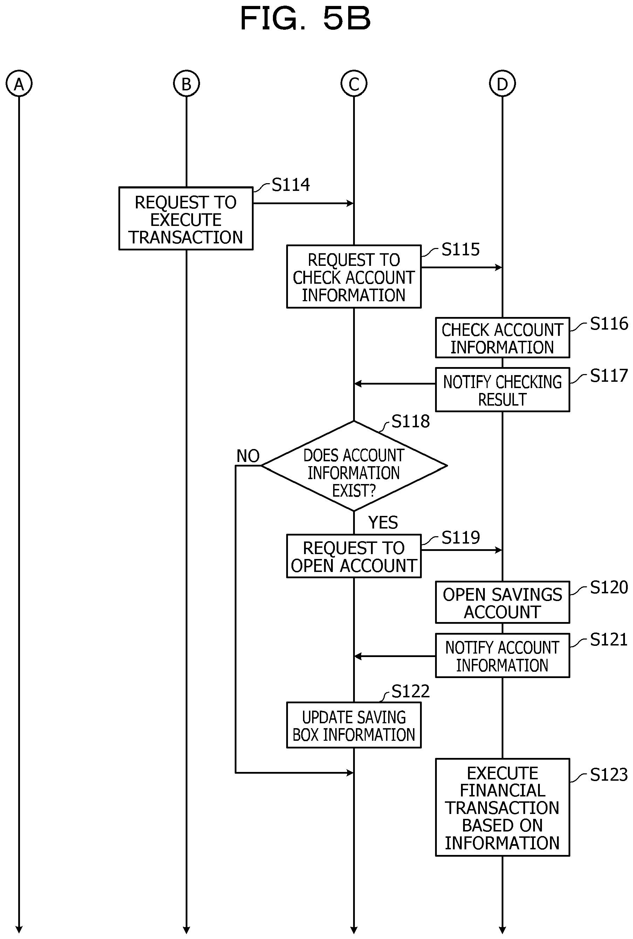

FIGs. 5A and 5B are sequence diagrams illustrating an example of a process of opening an account. FIGs. 5A and 5B illustrate an example in which the user A and the user B use the financial transaction managing device 20 to save their money for a specific purpose.

As illustrated in FIGs. 5A and 5B, the user terminal 10a receives user identification information entered by the user A (in S101). The user identification information includes a user ID of the user A and a password of the user A. The user A is an example of a first user. Next, the requester 151 of the user terminal 10a transmits the user identification information to the financial transaction managing device 20 and requests the financial transaction managing device 20 to execute the authentication (in S102).

Upon receiving the request to execute the authentication from the user terminal 10a, the authenticator 231 of the financial transaction managing device 20 executes the authentication using the user ID and password included in the user identification information (in S103). Then, the notifier 234 notifies the result of the authentication by the authenticator 231 to the user terminal 10a (in S104).

If the notifier 234 notifies that the authentication has not been successfully executed by the authenticator 231 (No in S105), the user terminal 10a does not execute processes S106 and later and stands by until the user terminal 10a receives entered user identification information again. On the other hand, if the notifier 234 notifies that the authentication has been successfully executed by the authenticator 231 (Yes in S105), the display section 12 displays a screen for entering setting items.

If the authentication has been successfully executed, the display section 12 may display a portal screen, a menu screen, and the like and display, if a predetermined operation is executed by the user, the screen for entering various setting items. In this case, it is assumed that the input section 11 and the display section 12 form a touch panel of a tablet terminal.

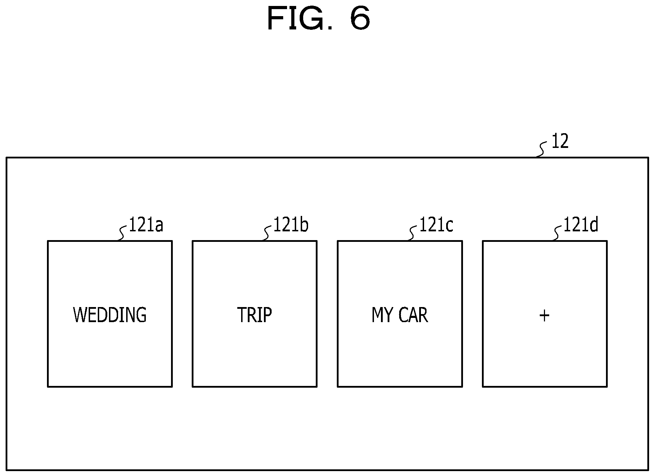

First, the display section 12 displays a saving box selection screen. FIG. 6 is a diagram illustrating an example of the saving box selection screen. As illustrated in FIG. 6, the display section 12 displays icons 121a, 121b, 121c, and 121d on the saving box selection screen. The icons 121a, 121b, and 121c correspond to the generated saving box information 222. When the icons 121a, 121b, and 121c are tapped, the display section 12 displays a display screen for displaying setting items included in the saving box information 222 and corresponding to the tapped icons, a maintenance screen, and the like.

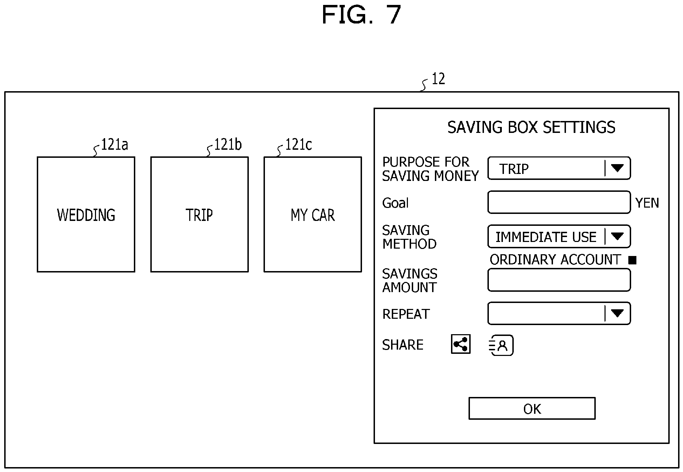

When the icon 121d is tapped, the display section 12 displays a screen for entering setting items or a saving box setting screen. FIG. 7 is a diagram illustrating an example of the saving box setting screen. As illustrated in FIG. 7, the display section 12 may pop up and display the saving box setting screen on the saving box selection screen. In addition, the entry of setting items such as a "purpose for saving money", a "goal", a "saving method", a " savings amount", "repeat, "share", and the like is received on the saving box setting screen.

The user terminal 10a receives an entered purpose for saving money from the saving box setting screen (in S106). The purpose for saving money is entered in the "purpose for saving money" item of the saving box setting screen. The purpose for saving money corresponds to the purpose for saving money that is included in the saving box information 222. In this case, the financial transaction managing device 20 may acquire, from open data or the like, a saving model associated with the entered purpose for saving money and present, to the users, recommended settings that are based on the saving model and are a savings amount and the like.

In addition, the user terminal 10a receives entered information of amounts of money from the saving box setting screen (in S107). The information of the amounts of money is entered in the "goal" item and the "savings amount" item that are included in the saving box setting screen. The information of the amounts of money corresponds to the target savings amount and the amount to be withdrawn, which are included in the saving box information 222.

In addition, the user terminal 10a receives an entered requirement from the saving box setting screen (in S108). The requirement is entered in the "repeat" item of the saving box setting screen. In addition, the requirement corresponds to the withdrawal timing indicated in the saving box information 222.

In addition, the user terminal 10a receives entered shared information from the saving box setting screen (in S109). The shared information includes an account number of an ordinary account of a user sharing the saving box information 222, an amount to be withdrawn from the savings account of the user sharing the saving box information 222, and the timing of the withdrawal. In this case, it is assumed that the user ID of the user B is entered as the user sharing the saving box information 222. The user B is an example of the second user.

When the receiver 233 of the financial transaction managing device 20 receives the shared information entered in the user terminal 10a, the notifier 234 notifies the user terminal 10b that the user B has been determined as a sharing user by the user A, and the notifier 234 checks whether or not the sharing is permitted (in S110). In this case, the user terminal 10b displays a screen for entering information indicating whether or not the sharing is permitted, and the user terminal 10b receives information entered on the screen by the user B. Then, the user terminal 10b notifies the financial transaction managing device 20 of whether or not the sharing is permitted (in S111). In addition, the notifier 234 of the financial transaction managing device 20 notifies the user terminal 10a of information notified by the user terminal 10b and indicating whether or not the sharing is permitted. (in S112).

If the notifier 234 notifies that the sharing has not been permitted (No in S113), the user terminal 10a stands by until the shared information is entered again. On the other hand, if the notifier 234 notifies that the sharing has been permitted (Yes in S113), the requester 151 of the user terminal 10a notifies the financial transaction managing device 20 of entered details of setting items and requests the financial transaction managing device 20 to execute a transaction (in S114).

When the financial transaction managing device 20 is requested by the user terminal 10a to execute the transaction, the requester 232 of the financial transaction managing device 20 requests the financial system 30 to check whether or not the account information of the ordinary account of the user A exists (in S115). The account information of the ordinary account of the user A may be entered in the user terminal 10a or may be associated with the user ID and stored in the financial transaction managing device 20.

The financial system 30 checks whether or not the account information exists (in S116), and the financial system 30 notifies the result of the checking to the financial transaction managing device 20 (in S117). If the financial system 30 notifies that the account information does not exist (No in S118), the financial transaction managing device 20 does not execute processes S119 and later. On the other hand, if the financial system 30 notifies that the account information exists (Yes in S118), the requester 232 of the financial transaction managing device 20 requests the financial system 30 to open a savings account (in S119). In this case, the requester 232 notifies, based on the details entered in the setting items and notified by the user terminal 10a, the financial system 30 of information to be used for a financial transaction between the ordinary account and the savings account. For example, the notifier 234 notifies the financial system 30 of the timing of withdrawal from the ordinary account to the savings account and an amount to be withdrawn.

When the financial system 30 is requested to open the account, the financial system 30 opens the savings account (in S120) and notifies the financial transaction managing device 20 of account information of the opened savings account (in S121). The financial transaction managing device 20 updates the saving box information 222 based on the account information notified by the financial system 30 and indicating the savings account (in S122). After that, the financial system 30 executes the financial transaction between the ordinary account and the savings account based on the information notified by the financial transaction managing device 20 (in S123).

In this case, as illustrated in FIG. 4, information on the account of the user A and information on the account of the user B are associated with each other and stored in the saving box information 222. Saving box IDs of the saving box information 222 are an example of association information. For example, a saving box ID "A001" is associated with the account information of the user A having a user ID "abc001" and the account information of the user B having a user ID "abc002".

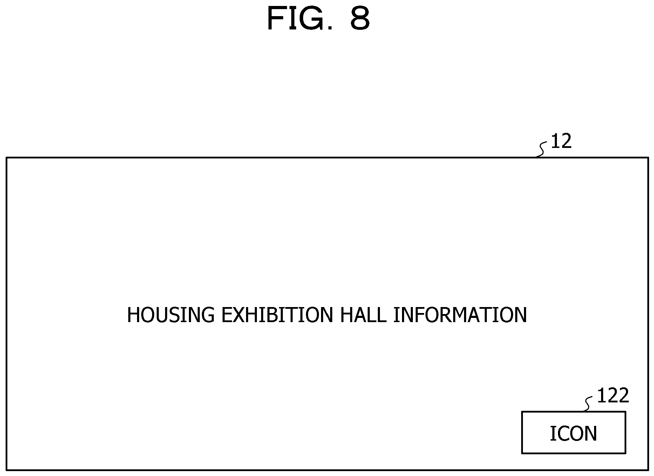

The display section 12 may display the portal screen based on the current position of the user terminal 10a. FIG. 8 is a diagram illustrating an example of the portal screen. As illustrated in FIG. 8, for example, if the user terminal 10a is currently positioned at a location related to a specific event such as a housing exhibition place, the display section 12 may display information of the event and display an icon 122 for displaying the saving box selection screen. In this case, when the icon 122 is tapped, the display section 12 displays the saving box selection screen.

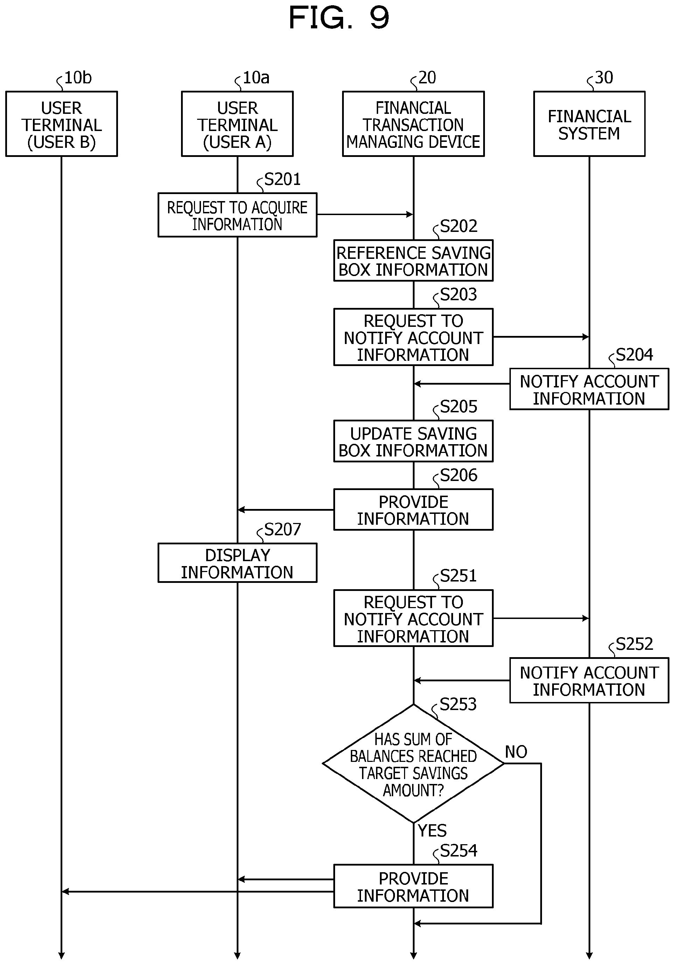

FIG. 9 is a sequence diagram illustrating an example of a process of providing account information. As illustrated in FIG. 9, the requester 151 of the user terminal 10a requests the financial transaction managing device 20 to acquire information (in S201). The requester 151 may request the financial transaction managing device 20 to acquire the information based on a specific operation of the user A or may request the financial transaction managing device 20 to acquire the information simultaneously with an authentication request to the financial transaction managing device 20.

Next, the requester 232 of the financial transaction managing device 20 references the saving box information 222 (in S202) and requests the financial system 30 to notify account information (in S203). Then, the financial system 30 notifies the account information to the financial transaction managing device 20 (in S204). The financial transaction managing device 20 updates the saving box information 222 based on the account information indicating the savings account and notified by the financial system 30 (in S205). In this case, for example, the financial transaction managing device 20 updates the current savings amount indicated in the saving box information 222 to a balance of the savings account.

Then, the provider 236 provides the saving box information 222 to the user terminal 10a (in S206). Next, the display section 12 of the user terminal 10a displays the saving box information 222 provided by the provider 236 on the portal screen (in S207).

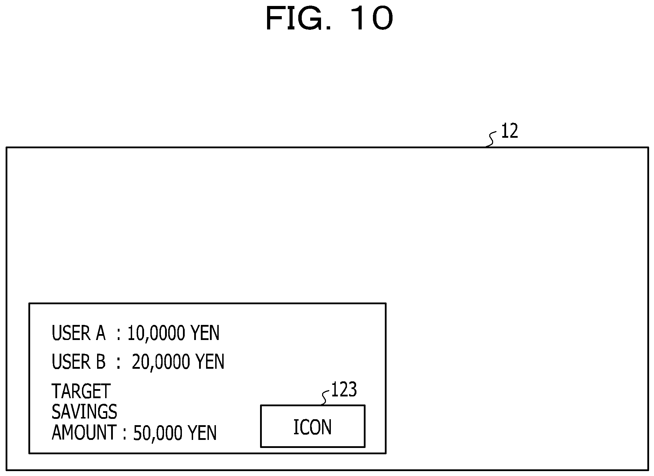

FIG. 10 is a diagram illustrating an example of the portal screen. As illustrated in FIG. 10, an icon 123 is displayed on the portal screen, for example. In addition, when the icon 123 is tapped, the display section 12 displays the saving box selection screen. In addition, in a region located close to the icon 123, a target savings amount "500, 000 yen" indicated in the saving box information 222 and current savings amounts "100, 000 yen" and "300, 000 yen" of the users are displayed. In addition, the current savings amounts may be displayed for the users, respectively, as illustrated in FIG. 10, or the sum of the current savings amounts may be displayed.

Even if a request is not provided from the user terminals 10, the financial transaction managing device 20 requests the financial system 30 to notify the account information at predetermined time (in S251). Then, the financial system 30 notifies the account information to the financial transaction managing device 20 (in S252). In this case, the provider 236 of the financial transaction managing device 20 compares the target savings amount indicated in the saving box information 222 with the sum of the balances of the savings accounts. Then, if the provider 236 detects that the sum of the balances of the savings accounts has reached the set target savings amount (Yes in S253), the provider 236 provides, to the user terminal 10a and the user terminal 10b, information indicating that the savings amount has reached the target savings amount (in S254). On the other hand, if the provider 236 detects that the sum of the balances of the savings accounts has not reached the set target savings amount (No in S253), the provider 236 does not provide the information to the user terminals 10.

As described above, the financial transaction managing device 20 requests the financial system 30 to open the first account of the first user included in multiple users in response to a request to open accounts of the multiple users. In addition, the financial transaction managing device 20 requests the financial system 30 or the other financial system to open the second account of the second user included in the multiple users in response to the request to open the accounts of the multiple users. Thus, the financial transaction managing device 20 may centrally manage accounts of multiple users.

In addition, the financial transaction managing device 20 may associate the information of the first account and the information of the second account with each other and store the information of the first account and the information of the second account in the storage section 22. In this case, the financial transaction managing device 20 provides, in response to the request, information obtained by integrating the information of the first account with the information of the second account. Thus, the financial transaction managing device 20 may manage multiple accounts as a single virtual account.

In addition, the information obtained by integrating the information of the first account with the information of the second account may be information indicating the sum of the balance of the first account and the balance of the second account. Thus, the financial transaction managing device 20 may manage a virtual account shared by multiple users.

In addition, the financial transaction managing device 20 may receive a set target savings amount for the sum of the balance of the first account and the balance of the second account. In this case, the financial transaction managing device 20 notifies a notification destination corresponding to either or both of the first user and the second user by detecting that the sum of the balance of the first account and the balance of the second account has reached the set target savings amount. Thus, the financial transaction managing device 20 may manage a virtual account in the case where multiple users save money using the virtual account shared by the multiple users.

In addition, the financial transaction managing device 20 may reference, in response to a request, the storage section 22 storing information in which the first user's account managed in a first financial system and the second user's account managed in the second financial system are associated with each other. Then, the financial transaction managing device 20 may acquire information on the account of the first user from the first financial system and acquire information on the account of the second user from the first financial system or the second financial system. In this case, the financial transaction managing device 20 provides the acquired information on the account of the first user and the acquired information on the account of the second user to a source of the request or provides information obtained by integrating the acquired information on the account of the first user with the acquired information on the account of the second user to the source of the request. Thus, the financial transaction managing device 20 may efficiently provide information on accounts to multiple users who save their money. Thus, the financial transaction managing device 20 may centrally manage accounts of multiple users.

In addition, the constituent elements of the devices illustrated in the accompanying drawings may not be physically configured as illustrated in the accompanying drawings. Specifically, specific forms of distribution and integration of the devices are not limited to those illustrated in the accompanying drawings, and the devices may be configured in arbitrary units by functionally or physically distributing and integrating all or a part of the devices based on various loads, usage states, and the like.

In addition, all or an arbitrary part of the various processing functions to be executed by the financial transaction managing device 20 may be executed by a CPU (or a microcomputer such as an MPU or a micro controller unit (MCU)). In addition, it goes without saying that all or an arbitrary part of the various processing functions may be executed by a program analyzed by and executed by the CPU (or the microcomputer such as the MPU or the MCU) or may be executed by hardware achieved by wired logic. In addition, multiple computers may collaborate with each other via cloud computing and execute the various processing functions to be executed by the financial transaction managing device 20.

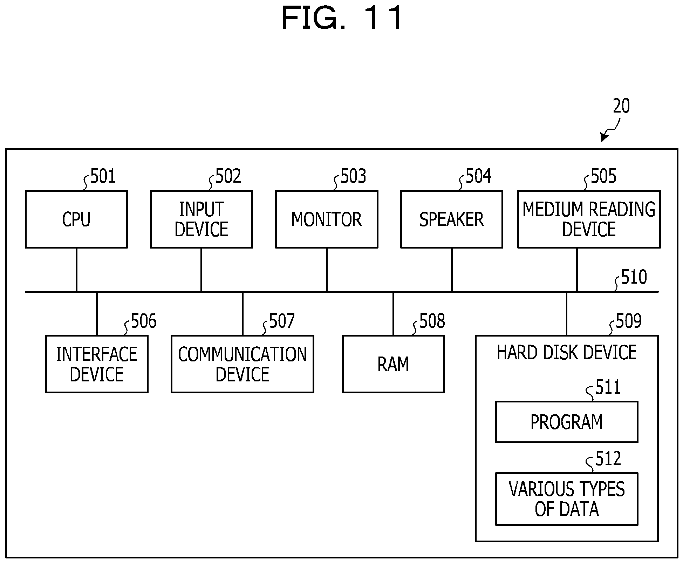

The various processes described above in the embodiment may be achieved by causing a computer to execute a program prepared in advance. An example of the computer (hardware) that executes the program having the same functions as described in the embodiment is described below. FIG. 11 is a block diagram illustrating an example of a hardware configuration of the financial transaction managing device according to the embodiment.

As illustrated in FIG. 11, the financial transaction managing device 20 includes a CPU 501 that executes various types of arithmetic processing, an input device 502 that receives input data, a monitor 503, and a speaker 504. In addition, the financial transaction managing device 20 includes a medium reading device 505 that reads the program and the like from a storage medium, an interface device 506 that is coupled to various devices, and a communication device 507 that communicates with and is coupled to an external device via a wired cable or wirelessly. In addition, the financial transaction managing device 20 includes a RAM 508 that temporarily stores various types of information, and a hard disk device 509. Furthermore, the devices (501 to 509) included in the financial transaction managing device 20 are coupled to a bus 510.

In the hard disk device 509, a program 511 for executing the authenticator 231, the requester 232, the receiver 233, the notifier 234, the acquirer 235, and the provider 236 that are described above in the embodiment is stored. In addition, in the hard disk device 509, various types of data 512 (authentication information 221, saving box information 222, and the like) to be referenced by the program 511 are stored. The input device 502 receives entered operational information from an operator of the financial transaction managing device 20. The monitor 503 displays various screens that are operated by the operator, for example. The interface device 506 is coupled to a printing device and the like, for example. The communication device 507 is coupled to a communication network such as a local area network (LAN) or the like and communicates various types of information with an external device via the communication network.

The CPU 501 reads the program 511 stored in the hard disk device 509, loads the read program 511 into the RAM 508, and executes the program 511, thereby executing the various processes. The program 511 may not be stored in the hard disk device 509. For example, the CPU 501 may read and execute the program 511 stored in a storage medium readable by the financial transaction managing device 20. The storage medium readable by the financial transaction managing device 20 corresponds to a portable recording medium such as a CD-ROM, a DVD, or a Universal Serial Bus (USB) memory, a semiconductor memory such as a flash memory, a hard disk drive, or the like, for example. In addition, The program 511 may be stored in a device coupled to a public line, the Internet, a LAN, or the like, and the financial transaction managing device 20 may read the program 511 from the device and execute the read program 511.

### [DESCRIPTION OF REFERENCE NUMERALS]

1 ··· Financial transaction management system
10a, 10b ··· User terminal
11 ··· Input section
12 ··· Display section
13, 21 ··· Communication section
14, 22 ··· Storage section
15, 23 ··· Controller
20 ··· Financial transaction managing device
30 ··· Financial system
151 ··· Requester
221 ··· Authentication information
222 ··· Saving box information
231 ··· Authenticator
232 ··· Requester
233 ··· Receiver
234 ··· Notifier
235 ··· Acquirer
236 ··· Provider

## Claims

1. A method using a computer, the method comprising:
receiving a plurality of request signals each of which requests opening an account;
transmitting, to a first financial system, a first request signal of the plurality of request signals which requests opening a first account in the first financial system;
transmitting, to at least one of the first financial system and a second financial system, a second request signal of the plurality of request signals which requests opening a second account in at least one of the first financial system and the second financial system;
associating first information indicating the first account with second information indicating the second account; and
outputting third information obtained by associating the first information with the second information.

2. The method according to claim 1, further comprising:
storing the first information and the second information in a memory.

3. The method according to claim 2,
wherein the third information indicates a value obtained by summing a first balance of the first account and a second balance of the second account.

4. The method according to claim 3, further comprising:
receiving fourth information indicating a target savings amount for the value obtained by summing the first balance and the second balance;
detecting that the value has reached the target savings amount; and
transmitting a notification signal to a source device that has transmitted the first request signal.

5. The method according to claim 4, further comprising:
acquiring fourth information on the first account and fifth information on the second account by referencing the memory; and
outputting the fourth information and the fifth information.

6. The method according to claim 5, further comprising:
outputting sixth information obtained by integrating the fourth information with the fifth information.

7. The method according to claim 6,
wherein each of the fourth information and the fifth information includes at least one of balance information, amount information to be withdrawn, and timing information of the withdrawal, and
wherein the sixth information includes at least one of purpose information for saving money and target savings amount information.

8. An information processing apparatus comprising:
a memory; and
a processor coupled to the memory and configured to:
receive a plurality of request signals each of which requests opening an account,
transmit, to a first financial system, a first request signal of the plurality of request signals which requests opening a first account in the first financial system,
transmit, to at least one of the first financial system and a second financial system, a second request signal of the plurality of request signals which requests opening a second account in at least one of the first financial system and the second financial system,
associate first information indicating the first account with second information indicating the second account, and
output third information obtained by associating the first information with the second information.

9. The information processing apparatus according to claim 8, wherein the processor is further configured to:
store the first information and the second information in the memory.

10. The information processing apparatus according to claim 9, wherein the third information indicates a value obtained by summing a first balance of the first account and a second balance of the second account.

11. The information processing apparatus according to claim 10,
wherein the processor is further configured to:
receive fourth information indicating a target savings amount for the value obtained by summing the first balance and the second balance,
detect that the value has reached the target savings amount, and
transmit a notification signal to a source device that has transmitted the first request signal.

12. The information processing apparatus according to claim 11,
wherein the processor is further configured to:
acquire fourth information on the first account and fifth information on the second account by referencing the memory, and
output the fourth information and the fifth information.

13. The information processing apparatus according to claim 12,
wherein the processor is further configured to:
output sixth information obtained by integrating the fourth information with the fifth information.

14. The information processing apparatus according to claim 13,
wherein each of the fourth information and the fifth information includes at least one of balance information, amount information to be withdrawn, and timing information of the withdrawal, and
wherein the sixth information includes at least one of purpose information for saving money and target savings amount information.

15. A program that causes an information processing apparatus to execute a process, the process comprising:
receiving a plurality of request signals each of which requests opening an account;
transmitting, to a first financial system, a first request signal of the plurality of request signals which requests opening a first account in the first financial system;
transmitting, to at least one of the first financial system and a second financial system, a second request signal of the plurality of request signals which requests opening a second account in at least one of the first financial system and the second financial system;
associating first information indicating the first account with second information indicating the second account; and
outputting third information obtained by associating the first information with the second information.
